# EUROPÄISCHE PATENTANMELDUNG

(11) **EP 3 170 685 A1**
(43) Veröffentlichungstag der Anmeldung: **24.05.2017**
(21) Anmeldenummer: 16198853.0
(22) Anmeldetag: 15.11.2016
(51) Int. Cl.: B60C 29/06, F16K 15/20, B60C 29/00, B60C 23/00, F16K 15/18

(54) **REIFENBEFÜLLVORRICHTUNG FÜR EIN FAHRZEUGRAD**

(30) Priorität: 20.11.2015 DE 102015120141
(71) Anmelder: BPW Bergische Achsen KG, 51674 Wiehl (DE)
(72) Erfinder: Kopplow, Hans Werner, 51588 Nümbrecht (DE)
(74) Vertreter: Bungartz Christophersen Partnerschaft mbB Patentanwälte

(57) **Zusammenfassung**

Vorgeschlagen wird eine Reifenbefüllvorrichtung für ein Fahrzeugrad, mit einem Luftkompressor (20), welcher Bestandteil des Fahrzeugs ist und über eine Luftzuleitung (25) an das Luftvolumen im Fahrzeugreifen angeschlossen ist. Damit nach einem Radwechsel, etwa in Folge einer Reifenpanne, das bordeigene automatische Reifenbefüllsystem unabhängig vom Bautyp des Ersatzrades weiter genutzt werden kann, ist die Luftzuleitung (25) über einen Adapter (50) mit dem auf der fahrzeugäußeren Seite des Fahrzeugrades angeordneten Reifenventil (12) verbunden. Der Adapter (50) ist mit einem Innengewinde (52) zum druckdichten Verschrauben mit dem Reifenventil (12) und mit einem Ventilelement (55) versehen, welches in dem Adapter (50) längsgeführt ist. Der dem Druck in der Luftzuleitung (25) ausgesetzte Querschnitt (F1) des Ventilelements (55) ist größer, als der dem Luftvolumen im Fahrzeugreifen zugewandte Querschnitt (F2).

## Beschreibung

Die Erfindung betrifft eine Reifenbefüllvorrichtung für ein Fahrzeugrad, mit einem Luftkompressor, welcher Bestandteil des Fahrzeugs ist und über eine Luftzuleitung an das Luftvolumen im Fahrzeugreifen angeschlossen ist.

Zur Sicherstellung eines jederzeit ausreichenden Luftdrucks im Fahrzeugreifen sind bordeigene Reifenfüllsysteme bekannt, die den Luftdruck im Fahrzeugreifen überwachen und fehlendes Luftvolumen, ggf. auch während der Fahrt, ersetzen. Hierzu befindet sich an Bord des Fahrzeugs ein Luftkompressor, von dem aus eine Luftzuleitung zu dem jeweiligen Reifen führt. Der Anschluss der Luftzuleitung an den Reifen erfolgt über einen speziellen Adapter. Dieser Adapter beinhaltet einen Drucksensor, der den Reifeninnendruck misst und bei Minderdruck ein Signal an die Kompressorsteuerung zum Auffüllen gibt, sowie einen Ventilmechanismus, der durch den vom Kompressor kommenden Druckstoß geöffnet werden kann. Hingegen sind Standardventile so gestaltet, dass der Ventilmechanismus rein mechanisch durch das verwendete Nachfüllwerkzeug geöffnet wird, nicht hingegen durch einen Druckstoß von außen.

Ist das Fahrzeug mit dem speziellen Reifenbefüllsystem ausgerüstet und sollen auch nach Austausch des Rades die Vorteile des Reifenbefüllsystems nutzbar sein, muss auch das für den Fall einer Reifenpanne vorrätige Ersatzrad mit einem entsprechenden Ventilmechanismus ausgestattet sein. In der Praxis sind jedoch Ersatzräder häufig Standardräder, deren Reifen also mit herkömmlichen Ventilen versehen sind, und nicht mit dem speziell auf automatische Nachfüllsysteme angepassten Ventilmechanismus.

Die **Aufgabe** der Erfindung ist daher die Bereitstellung einer Lösung, bei der nach einem Radwechsel, etwa in Folge einer Reifenpanne, das bordeigene automatische Reifenbefüllsystem unabhängig vom Bautyp des Ersatzrades weiter genutzt werden kann.

Zur **Lösung** dieser Aufgabe wird eine Reifenbefüllvorrichtung mit den Merkmalen des Anspruchs 1 vorgeschlagen. Die Luftzuleitung ist über einen Adapter mit dem auf der fahrzeugäußeren Seite des Fahrzeugrades angeordneten Reifenventil verbunden. Der Adapter ist mit einem Innengewinde zum druckdichten Verschrauben mit dem Reifenventil und mit einem Ventilelement versehen, welches in dem Adapter längsgeführt ist. Der dem Druck in der Luftzuleitung ausgesetzte Querschnitt des Ventilelements ist größer, als der in die entgegengesetzte Richtung weisende, dem Druck in dem Fahrzeugreifen ausgesetzte Querschnitt.

Eine solche Vorrichtung nutzt den prinzipiellen Vorteil eines bordeigenen Luftkompressors, indem die Kontrolle und ggf. das Nachfördern von Luftdruck in den jeweiligen Reifen jederzeit und auch während der Fahrt möglich ist.

Ist z. B. bei dem in dem Adapter angeordneten Ventilelement dessen Betätigungsquerschnitt größer als der eines Standard-Reifenbefüllventils, lässt sich letzteres durch einen Luft-Druckstoß des Luftkompressors öffnen, um so das Befüllen des Reifens zu ermöglichen.

Die Verwendung des Reifenbefüllsystems ist unabhängig von der Verwendung eines speziellen Anschlusses für die Verbindung des bordeigenen Luftkompressors mit dem Volumen des Fahrzeugreifens. Vielmehr ist das Reifenbefüllsystem für den Einsatz bei herkömmlichen Fahrzeugrädern ausgebildet, die also mit einem konventionellen, üblicherweise an der fahrzeugäußeren Seite des Fahrzeugrades angeordneten Reifenventil versehen sind. Wird im Fall einer Reifenpanne das betroffene Fahrzeugrad durch das an Bord vorhandene Ersatzrad ersetzt, kann das automatische Reifenbefüllsystem in jedem Fall ohne Einschränkungen weiter genutzt werden. Hierzu ist der am Ende der Luftzuleitung angeordnete Adapter mit einem Innengewinde versehen, und er wird mittels dieses Gewindes druckdicht mit dem Reifenventil verschraubt.

Der Adapter ist mit einem Ventilelement versehen, welches in dem Adapter längsgeführt ist und welches gegen den Ventilkörper des Reifenventils abgestützt sein kann. Um im Falle des Nachförderns von Druckluft das Reifenventil zu öffnen, ist der dem Druck in der Luftzuleitung ausgesetzte Querschnitt des Ventilelements größer, als der Querschnitt des Ventilkörpers im Reifenventil. Infolge der Flächen- und der Druckdifferenz gelangt durch den Kompressor nachgeförderte Druckluft in den Reifen hinein.

Zur Erzielung einer für das Ventil ausreichenden Flächen- und Druckdifferenz sollte der dem Druck in der Luftzuleitung ausgesetzte Querschnitt des Ventilelements mindestens das 1,5fache des in die entgegengesetzte Richtung weisenden Querschnitts betragen, welcher dem Druck im Fahrzeugreifen ausgesetzt ist.

Mit einer Ausgestaltung in der Reifenbefüllvorrichtung wird vorgeschlagen, dass das Ventilelement in einer Bohrung, mit der der Adapter versehen ist, längsgeführt ist.

Mit einer weiteren Ausgestaltung wird vorgeschlagen, dass die Abdichtung des Ventilelements ringförmig ist, wobei die eine Dichtfläche an dem Ventilelement und die dazu korrespondierende Dichtgegenfläche im Bereich der Bohrung ausgebildet ist. Vorzugsweise ist die Dichtgegenfläche ein zylindrischer Wandabschnitt der Bohrung.

Eine weitere Ausgestaltung der Reifenbefüllvorrichtung ist durch einen Drucksensor in dem Adapter gekennzeichnet. Der Drucksensor befindet sich hierbei zwischen dem Innengewinde und der Abdichtung des Ventilelements. Der Drucksensor kann an eine entsprechende Drucksteuereinheit angeschlossen sein, an die auch der Luftkompressor signaltechnisch angeschlossen ist. Wird mittels des Drucksensors ein zu geringer Reifendruck festgestellt, ergeht über die Drucksteuereinheit an den Luftkompressor das Signal zum Nachfördern von Druckluft in den betreffenden Reifen. Sofern an allen Rädern des Fahrzeugs entsprechende Anschlüsse vorhanden sind, übernimmt die Drucksteuereinheit die zentrale Kontrolle und die Drucknachförderung für alle diese Fahrzeugräder.

Im Folgenden ist die Erfindung anhand von Ausführungsbeispielen unter Bezugnahme auf die Zeichnungen und die darin wiedergegebenen Einzelheiten näher erläutert. Es zeigen:
- Fig. 1: in einer Schnittdarstellung eine an einem Fahrzeugrad angeordnete Reifenbefüllvorrichtung einschließlich einer Luftzuleitung und eines Adapters, welcher den Anschluss zum konventionell ausgebildeten Reifenventil des Fahrzeugrades herstellt, und
- Fig. 2: eine andere Ausführungsform des Adapters der Vorrichtung.

Die hier beschriebene Reifenbefüllvorrichtung ist besonders geeignet für Nutzfahrzeuge und insbesondere für nicht-angetriebene Achsen von Nutzfahrzeugen und Nutzfahrzeuganhängern.

Die Fahrzeugachse 1 des Fahrzeugs, welche z. B. eine starre, von der einen zur anderen Fahrzeugseite durchgehende Achse sein kann, ist an ihren Enden jeweils mit einem verjüngten Achsschenkel 2 versehen. Auf dem Achsschenkel 2 ist über eine Drehlagerung 3, welche hier aus zwei Wälzlagern besteht, eine Radnabe 5 drehbar abgestützt. Auf ihrem Außenumfang ist die Radnabe 5 mit einem einstückig angeformten Nabenflansch 6 versehen, an dem mittels mehrerer Radbolzen 7 ein Fahrzeugrad 10 befestigt ist.

Das Fahrzeugrad 10 besteht in üblicher Weise aus der Radfelge sowie dem mit Luft befüllten Reifen. Der Reifen ist mit einem konventionellen Reifenventil bzw. Reifenbefüllventil 12 versehen, welches sich wie üblich auf der fahrzeugäußeren Seite des Fahrzeugrades 10 bzw. der Felge des Fahrzeugrades befindet. Derartige Standard-Reifenventile 12 sind, damit sie den Reifendruck halten, in ihrem Inneren mit einem Ventilkörper 12A versehen.

Nach fahrzeuginnen ist die Radlagerung 3 durch eine Schleifdichtung 11 gegen Staub und Schmutz geschützt. Nach fahrzeugaußen erfolgt der Schutz der Radlagerung 5 über eine Abdeckung 15, welche von außen auf die Radnabe 5 aufgesetzt ist. An der kappenförmig gestalteten Abdeckung 15 befindet sich ein Kompressorgehäuse 21 mit einem darin angeordneten Luftkompressor 20. Der Luftkompressor 20 ist elektrisch angertrieben und dazu ausgebildet, Luft zu komprimieren und diese Druckluft über eine Luftzuleitung 25 zu dem Reifenbefüllventil 12 des Fahrzeugreifens zu fördern, um so einen Druckabfall in dem Reifen auszugleichen, ggf. auch während der Fahrt, d. h. bei drehendem Fahrzeugrad 10. Baugleiche Reifenbefüllsysteme befinden sich auch an den anderen Fahrzeugrädern 10 des Fahrzeugs.

Die Luftzuleitung 25 ist vorzugsweise ein flexibler, druckfester Druckschlauch, welcher aus dem Kompressorgehäuse 21 herausgeführt ist. Zwecks Ansaugen zu komprimierender Luft aus der Umgebung ist das Kompressorgehäuse 21 mit einer Luftansaugöffnung 26 versehen.

Auf das vorzugsweise zylindrisch gestaltete Kompressorgehäuse 21 ist von fahrzeugaußen eine Kappe 30 aufgesetzt. Diese ist von solcher Länge, dass sie das Kompressorgehäuse 21 und auch die Abdeckung 15 unter Bildung eines Ringspalts 32 umschließt. Zwischen der Innenwandung 33 der Kappe 30 und der Umfangsfläche 34 des Kompressorgehäuses 21 ist der nur zu der Radnabe 5 hin offene Ringspalt 32 angeordnet, in dem sich die Luftansaugöffnung 26 befindet. Angesaugte Umgebungsluft kann daher nur auf dem Umweg durch den Ringspalt 32 hindurch zu der Luftansaugöffnung 26 gelangen. Zur Filterung der in den Ringspalt 32 eintretenden Umgebungsluft ist eine Dichtung 40 in dem Ringspalt 32 zwischen dessen zu der Radnabe 5 hin gerichteter Öffnung und der Luftansaugöffnung 26 angeordnet.

Für den elektrischen Antrieb des Luftkompressors 20 weist zumindest eine elektrische Zuleitung 46 des Antriebs eine als Schleifkontakt ausgebildete Verbindung 45 auf. Diese Verbindung ist hier zentral am Achsschenkel 2 und damit auf der Nabenachse angeordnet. Die weitere bzw. zweite elektrische Zuleitung des Antriebs kann entweder ebenfalls über einen Schleifkontakt realisiert sein, oder aber die metalllisch leitenden Teile der Radnabe bzw. der Radlagerung übernehmen die Funktion des Stromleiters.

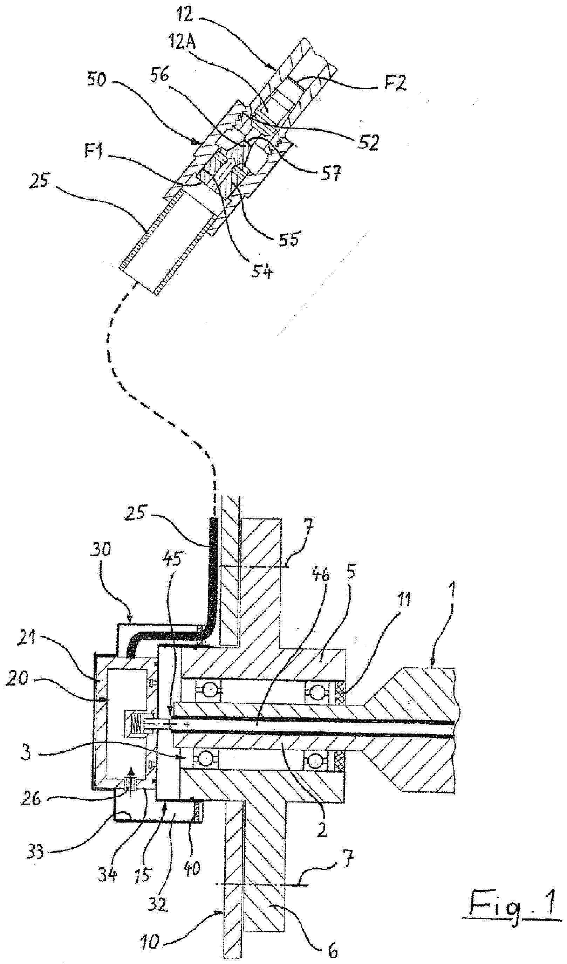

Gemäß Fig. 1 ist das Ende der Luftzuleitung 25 druckdicht mit einem Adapter 50 verbunden. Der Adapter 50 ist mit einem Innengewinde 52 zum druckdichten Verschrauben des Adapters mit dem Außengewinde des konventionellen Reifenbefüllventils 12 versehen. Bestandteil des Reifenbefüllventils 12 ist ein darin längsbeweglich angeordneter Ventilkörper 12A, welcher den Ventilquerschnitt des Reifenventils freigibt, indem der Ventilkörper 12A in Richtung zu dem Reifenvolumen bewegt wird. Der Ventilkörper 12A arbeitet also wie ein Rückschlagventil. Er schließt den Befüllquerschnitt, sofern von außen kein Druck auf den Ventilkörper 12A ausgeübt wird, unter dem Druck im Reifen.

Der Adapter 50 weist eine zu der Luftleitung hin offene Bohrung 54 auf, in der ein nach Art eines Kolbens ausgebildetes Ventilelement 55 längsbeweglich angeordnet ist. Das Ventilelement 55 ist gegenüber der Bohrung 54 abgedichtet. Diese Abdichtung ist daher ringförmig, wobei die eine Dichtfläche an dem Ventilelement 55 ausgebildet ist, und die korrespondierende Dichtgegenfläche die Bohrung 54 oder ein zylindrischer Wandabschnitt der Bohrung ist.

Gemäß Fig. 1 ist die dem Druck in der vom Kompressor 20 kommenden Luftzuleitung 25 ausgesetzte Querschnittsfläche F1 am Ventilelement 55 größer und vorzugsweise 50 % größer, als der dem Druck im Fahrzeugreifen ausgesetzte Querschnitt F2 des Ventilkörpers 12A des Standard-Reifenbefüllventils 12.

Wegen der größeren Querschnittsfläche F1 bewegt sich das Ventilelement 55 zumindest dann in Längsrichtung des Adapters 50 zu dem Reifenventil 12 hin, wenn der Druck in der Luftzuleitung 25 größer ist, als der aktuelle Reifendruck. Das Ventilelement 55 ist mit einem im Vergleich zu dem Kolben schlank ausgebildeten Zapfen 56 versehen, mit dessen Stirnfläche 57 sich das Ventilelement 55 von außen gegen den Ventilkörper 12A des Reifenventils 12 abstützt. Durch die Bewegung des Ventilelements 55 wird daher der reifenseitige Ventilkörper 12A geöffnet, so dass die über die Luftzuleitung 25 nachgeförderte Druckluft in den Reifen gelangt. Lässt der Druck in der Zuleitung nach, übernimmt wieder der Ventilkörper 12A die Abdichtung des Reifenvolumens.

Das Standard-Reifenbefüllventil 12 einschließlich seines Ventileinsatzes kann unverändert erhalten bleiben. In diesem Fall muss der Adapter 50 beim Aufschrauben auf das Reifenbefüllventil 12 dieses mechanisch öffnen, indem der Ventilkörper 12A nach innen Richtung Reifeninnenseite gedrückt wird. Das Standard-Reifenbefüllventil 12 ist dann selbst immer offen, und das Spezialventil im zusätzlichen Adapter 50 übernimmt die Funktion des Reifenventils. Indem das Ventilelement 55 eine im Vergleich größere Fläche in Richtung Luftzuleitung 25 aufweist, lässt sich das Ventilelement 55 durch einen Druckstoß öffnen, und der Reifen kann befüllt werden.

Gemäß einer anderen Ausführungsform wird der Ventilkörper 12A des Standard-Reifenbefüllventils 12 von außen herausgeschraubt. Reifenseitig verbleibt in diesem Fall nur ein offenes Befüllrohr mit Außengewinde, auf welches der Adapter 50 mit dem darin angeordneten Ventilelement 55 aufgeschraubt wird. In diesem Fall benötigt der Zusatzadapter keine Einrichtung zum mechanischen Öffnen des Standardventils. Das Spezialventil im Adapter 50 übernimmt vollständig die Funktion des Reifenventils.

Indem das Ventilelement 55 eine größere Fläche F1 in Richtung Luftzuleitung 25 aufweist, als die dem Luftvolumen im Fahrzeugreifen zugewandte bzw. diesem Druck ausgesetzte Fläche F2 beträgt, lässt sich das Ventilelement 55 durch einen Druckstoß öffnen, und der Reifen wird befüllt

Ist ferner ein Drucksensor vorhanden, muss das Standard-Reifenventil 12 entweder mechanisch geöffnet werden, oder aber sein Ventileinsatz muss entfernt sein, damit der Drucksensor permanent mit dem Reifendruck verbunden ist, und der Kompressorsteuerung bei einem Druckabfall signalisieren kann, dass nachgefüllt werden muss.

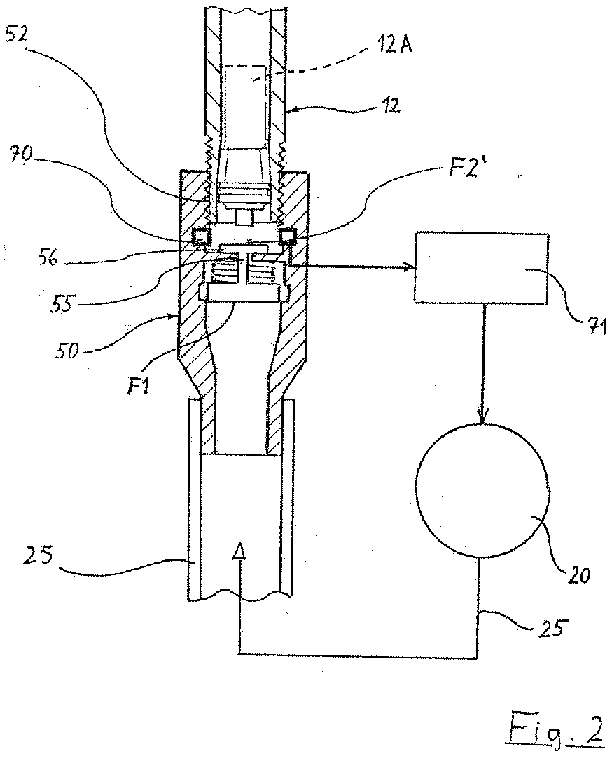

In Fig. 2 ist eine weitere Ausführungsform wiedergegeben. Auch bei dieser Ausführungsform öffnet das Ventilelement 55 den Ventilkörper 12A des Reifenventils 12. Jedoch kann der Ventilkörper 12A auch entfallen. Denn ist die Luftzuleitung 25 drucklos oder druckentlastet, vermag das Ventilelement 55 selbst das Reifenvolumen abzudichten, indem das Ventilelement 55 unter der Wirkung des Reifendrucks gegen einen Anschlag in dem Adapter stößt, und dabei abdichtet. An der Verschraubung zwischen dem Innengewinde 52 und dem Außengewinde des Reifenventils 12 liegt dauernd dieser Reifendruck an.

Das Ventilelement 55 ist hier als ein Kolben mit abschnittsweise unterschiedlichen Durchmessern ausgebildet. Die der Luftzuleitung 25 zugewandte und dem Druck in der Luftzuleitung 25 ausgesetzte Querschnittsfläche F1 des Ventilelements 55 ist größer, als die ebenfalls an dem Ventilelement 55 ausgebildete und dem Reifenventil 12 zugewandte Querschnittsfläche F2'. Auf die Querschnittsfläche F2' wirkt jener Druck, welcher an der Verschraubung des Adapters 50 mit dem Reifenventil 12 anliegt. Auch hier sollte der Querschnitt F1 mindestens das 1,5fache des Querschnitts F2' betragen.

Bei der Ausführungsform nach Fig. 2 ist ein Drucksensor 70 in dem Adapter 50 zwischen dem Innengewinde 52 und der Abdichtung des Ventilelements 55 angeordnet. Der Drucksensor 70 erfasst also jenen Druck, welcher an der Verschraubung des Adapters 50 mit dem Reifenventil 12 anliegt, und welcher auf den Querschnitt F2' wirkt. Der vorzugsweise ringförmig gestaltete Drucksensor 70 ist signaltechnisch mit der Kompressorsteuerung 71 verbunden. An die Kompressorsteuerung 71 ist der Luftkompressor 20 signaltechnisch angeschlossen. Die Kompressorsteuerung 71 kann für alle Räder und Reifenbefüllsysteme des Fahrzeugs gemeinsam sein.

Insgesamt bestehen daher zwei Möglichkeiten:
Bei der ersten Möglichkeit bleibt das Reifenbefüllventil 12 einschließlich seines Ventileinsatzes komplett erhalten. In diesem Fall muss der Adapter bei seinem Aufschrauben das Reifenventil mechanisch öffnen, indem der Ventileinsatz des Reifenbefüllventils 12 nach innen zur Reifeninnenseite gedrückt wird. Von da an ist das Reifenbefüllventil 12 immer offen, stattdessen übernimmt das Spezialventil im Adapter 50 die Funktion des Reifenventils. Indem das Ventilelement 55 eine im Vergleich größere Fläche in Richtung der Luftzuleitung 25 aufweist, lässt sich das Ventilelement 55 durch einen Druckstoß des Luftkompressors öffnen, und der Reifen so befüllen.

Oder aber der Ventileinsatz bzw. der Ventilkörper 12A des Reifenventils 12 wird von außen herausgeschraubt, da er nicht mehr benötigt wird. Von dem Reifenventil 12 verbleibt dann nur ein offenes Befüllrohr mit Außengewinde, auf welches dann der in Fig. 2 dargestellte Adapter 50 mit dem darin angeordneten Ventilelement 55 aufgeschraubt wird. In diesem Fall wird keine Einrichtung zum mechanischen Öffnen des Standard-Reifenventils 12 benötigt. Stattdessen übernimmt das Ventilelement 55 des Adapters 50 vollständig die Funktion des Reifenventils. Indem das Ventilelement 55 eine größere Fläche F1 in Richtung Luftzuleitung 25 als die Fläche F2' in Richtung zu dem Reifenvolumen aufweist, lässt sich das Ventilelement durch einen Druckstoß öffnen, um den Reifen zu befüllen.

### Bezugszeichenliste

- 1: Fahrzeugachse
- 2: Achsschenkel
- 3: Drehlagerung
- 5: Radnabe
- 6: Nabenflansch
- 7: Radbolzen
- 10: Fahrzeugrad
- 11: Schleifdichtung
- 12: Reifenventil
- 12A: Ventilkörper
- 15: Abdeckung
- 20: Luftkompressor
- 21: Kompressorgehäuse
- 25: Luftzuleitung
- 26: Luftansaugöffnung
- 30: Kappe
- 32: Ringspalt
- 33: Innenwandung
- 34: Umfang des Kompressorgehäuses
- 40: Dichtung
- 45: Verbindung, Schleifkontakt
- 46: elektrische Zuleitung, Kabel
- 50: Adapter
- 52: Innengewinde
- 54: Bohrung
- 55: Ventilelement
- 56: Zapfen
- 57: Stirnfläche
- 70: Drucksensor
- 71: Kompressorsteuerung

- F1: Querschnitt
- F2: Querschnitt
- F2': Querschnitt

## Patentansprüche

1. Reifenbefüllvorrichtung für ein Fahrzeugrad, mit einem Luftkompressor (20), welcher Bestandteil des Fahrzeugs ist und über eine Luftzuleitung (25) an das Luftvolumen im Fahrzeugreifen angeschlossen ist, **dadurch gekennzeichnet, dass** die Luftzuleitung (25) über einen Adapter (50) mit dem auf der fahrzeugäußeren Seite des Fahrzeugrades angeordneten Reifenventil (12) verbunden ist, dass der Adapter (50) mit einem Innengewinde (52) zum druckdichten Verschrauben mit dem Reifenventil (12) und mit einem Ventilelement (55) versehen ist, welches in dem Adapter (50) längsgeführt ist, und dass der dem Druck in der Luftzuleitung (25) ausgesetzte Querschnitt (F1) des Ventilelements (55) größer ist, als der dem Luftvolumen im Fahrzeugreifen zugewandte Querschnitt (F2, F2').

2. Reifenbefüllvorrichtung nach Anspruch 1, **dadurch gekennzeichnet, dass** der dem Druck in der Luftzuleitung (25) ausgesetzte Querschnitt (F1) des Ventilelements (55) mindestens das 1,5-fache des dem Luftvolumen im Fahrzeugreifen zugewandten Querschnitts (F2, F2') beträgt.

3. Reifenbefüllvorrichtung nach Anspruch 1 oder 2, **dadurch gekennzeichnet, dass** das Ventilelement (55) gegen den Ventilkörper (12A) des Reifenventils (12) abgestützt ist, und dass der dem Druck in der Luftzuleitung (25) ausgesetzte Querschnitt (F1) des Ventilelements (55) größer ist, als der Querschnitt (F2) des Ventilkörpers (12A) des Reifenventils (12).

4. Reifenbefüllvorrichtung nach Anspruch 1, 2 oder 3, **dadurch gekennzeichnet, dass** das Ventilelement (55) in einer Bohrung, mit der der Adapter versehen ist, längsgeführt ist.

5. Reifenbefüllvorrichtung nach einem der Ansprüche 1 - 4, **dadurch gekennzeichnet, dass** die Abdichtung des Ventilelements (55) ringförmig ist, wobei die eine Dichtfläche an dem Ventilelement (55) und die korrespondierende Dichtgegenfläche im Bereich der Bohrung ausgebildet ist.

6. Reifenbefüllvorrichtung nach Anspruch 5, **dadurch gekennzeichnet, dass** die Dichtgegenfläche ein zylindrischer Wandabschnitt der Bohrung ist.

7. Reifenbefüllvorrichtung nach Anspruch 5 oder 6, **gekennzeichnet durch** einen Drucksensor (70), der in dem Adapter (50) zwischen dem Innengewinde (52) und der Abdichtung des Ventilelements (55) angeordnet ist.

8. Reifenbefüllvorrichtung nach Anspruch 7, **dadurch gekennzeichnet, dass** der Drucksensor (70) signaltechnisch mit einer Kompressorsteuerung (71) verbunden ist, an die auch der Luftkompressor (20) signaltechnisch angeschlossen ist.

9. Reifenbefüllvorrichtung nach einem der Ansprüche 1 oder 2, **dadurch gekennzeichnet, dass** das Ventilelement (55) bei druckloser oder druckentlasteter Luftzuleitung (25) das Luftvolumen im Fahrzeugreifen verschließt.
